# FASCICULE DE BREVET EUROPEEN

(11) **EP 2 179 167 B1**
(45) Date de publication et mention de la délivrance du brevet: **16.02.2011**
(21) Numéro de dépôt: 08831156.8
(22) Date de dépôt: 07.07.2008
(51) Int. Cl.: F02K 1/76, F02K 1/72

(54) **SYSTEME DE COMMANDE D'AU MOINS UN ACTIONNEUR DE CAPOTS D'UN INVERSEUR DE POUSSEE POUR TURBOREACTEUR**
SYSTEM ZUR STEUERUNG MINDESTENS EINES AKTUATORS FÜR DIE COWLINGS EINES TURBOSTRAHLMOTOR-SCHUBUMKEHRERS
SYSTEM FOR CONTROLLING AT LEAST ONE ACTUATOR FOR THE COWLINGS OF A TURBOJET ENGINE THRUST REVERSER

(30) Priorité: 20.08.2007 FR 0705926
(43) Date de publication de la demande: 28.04.2010
(73) Titulaire: Aircelle, 76700 Gonfreville l'Orcher (FR)
(72) Inventeur: MAALIOUNE, Hakim, F-78630 Orgeval (FR)
(74) Mandataire: Maureau, Philippe
(86) Numéro de dépôt international: PCT/FR2008/000978
(87) Numéro de publication internationale: WO 2009/034246

(56) Documents cités:
- WO-A-2006/134253
- FR-A- 2 872 223

## Description

La présente invention se rapporte à un système de commande d'au moins un actionneur de capots d'un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverse que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089 ou dans le document FR 2872223.

Cependant, les actionneurs électromécaniques présentent également plusieurs inconvénients qu'il est nécessaire de résoudre pour profiter pleinement des avantages qu'ils apportent en termes de gain de masse et d'encombrement.

En particulier, pour des conditions de température extrêmes, c'est-à-dire par exemple pour des températures de l'ordre de -40°C ou de l'ordre de 50°C, le couple délivré par le moteur électrique entraînant les actionneurs électromécaniques peut être insuffisant pour entraîner ces derniers et donc permettre un déplacement des capots mobiles.

En effet, il a été constaté que, pour des conditions de température extrêmes, les actionneurs électromécaniques nécessitent la délivrance, par le moteur électrique entraînant ces derniers, d'un couple supérieur à celui délivré pour des conditions de température normales afin de permettre leur entraînement.

Ainsi, pour des conditions de température extrêmes, le fonctionnement de l'inverseur de poussée peut être remis en cause lors de l'atterrissage d'un avion équipé d'un tel inverseur.

Une solution pour pallier cet inconvénient consisterait à adapter le moteur électrique de façon à ce qu'il délivre un couple unique suffisant pour permettre un entraînement des actionneurs électromécaniques et donc un déplacement des capots de l'inverseur aussi bien pour des conditions de température normales que pour conditions de température extrêmes.

Toutefois, la délivrance constante d'un couple élevé par le moteur électrique engendrerait une usure rapide du moteur électrique et des actionneurs électromécaniques.

De plus, l'utilisation de courants importants entraîne des impacts sur la fiabilité/durée de vie de l'électronique de puissance du système de commande.

L'usure rapide du moteur électrique et des actionneurs électromécaniques est d'autant plus dommageable que la délivrance d'un couple élevé n'est nécessaire que dans très peu de cas, puisque le système de commande se trouve la plupart du temps dans des conditions de température normales ne nécessitant pas la délivrance d'un tel couple.

La présente invention consiste à résoudre ces inconvénients et plus particulièrement à fournir un système de commande d'au moins un actionneur de capots d'un inverseur de poussée pour turboréacteur permettant un déplacement des capots de l'inverseur dans des conditions de température extrêmes, tout en évitant une fatigue rapide de l'actionneur.

A cet effet, la présente invention concerne un système de commande d'au moins un actionneur de capots d'un inverseur de poussée pour turboréacteur comprenant :
- au moins un actionneur de capot entraîné par au moins un moteur électrique,
- des moyens de commande du moteur électrique,
caractérisé en ce que
les moyens de commande du moteur électrique comprennent des moyens de détermination et/ou d'estimation de la température extérieure au turboréacteur, les moyens de commande du moteur électrique étant agencés pour ajuster le couple moteur délivré par le moteur électrique en fonction de cette température extérieure,
et en ce que
les moyens de détermination et/ou d'estimation comportent des moyens de mesure de température agencés pour mesurer la température au niveau des moyens de commande, les moyens de détermination et/ou d'estimation étant agencés pour déterminer la température extérieure au turboréacteur en fonction de la température mesurée.

L'ajustement du couple moteur délivré par le moteur électrique en fonction de la température extérieure permet d'appliquer d'une part un faible couple moteur pour des conditions de température normales et d'autre part un couple moteur élevé uniquement pour des conditions de température extrêmes. Cette disposition permet donc de limiter une fatigue rapide de l'actionneur et également de garantir le fonctionnement de l'inverseur de poussée pour des conditions de température extrêmes.

En outre, le fait que les moyens de détermination et/ou d'estimation comportent des moyens de mesure de température agencés pour mesurer la température au niveau des moyens de commande permet de réaliser une détermination de la température extérieure en utilisant des composants localisés au niveau des moyens de commande situés sur le turboréacteur ou la nacelle, sans nécessiter de capteurs déportés sur l'extérieur de l'ensemble propulsif, et la liaison avec ces capteurs déportés.

Avantageusement, la caractéristique de l'ajustement par les moyens de commande du couple moteur délivré par le moteur électrique en fonction de la température extérieure comprend un ensemble de paliers correspondant à des gammes de températures distinctes.

Selon un mode de réalisation de l'invention, la valeur de l'ajustement du couple moteur est déterminée au départ d'une phase d'actionnement pour la durée de la phase d'actionnement.

Ces dispositions permettent de réaliser simplement l'asservissement du moteur lors de la phase d'ouverture, sans prendre en compte de modifications de l'ajustement du couple moteur sur la durée de la phase d'actionnement, les modifications de la température n'étant pas significatives sur la durée d'une phase d'actionnement.

De toute façon l'invention sera bien comprise à l'aide de la description qui suit en référence au dessin schématique annexé représentant, à titre d'exemple non limitatif, une forme d'exécution de ce système de commande.
La figure 1 est une vue schématique partielle en perspective d'une nacelle intégrant un inverseur de poussée à grille.
La figure 2 est une représentation schématique des capots mobiles et de leur système d'actionnement.
La figure 3 est une représentation schématique du système de commande des actionneurs des capots mobiles.
La figure 4 montre deux courbes représentant l'évolution du couple moteur en fonction de la course des capots pour deux valeurs de température distinctes et pour un régime moteur donné.

Avant de décrire en détail un mode de réalisation de l'invention, il est important de préciser que le système décrit n'est pas limité à un type d'inverseur en particulier. Bien qu'illustrée par un inverseur à grilles, l'invention pourra être mise en oeuvre avec des inverseurs de conception différentes, notamment à portes.

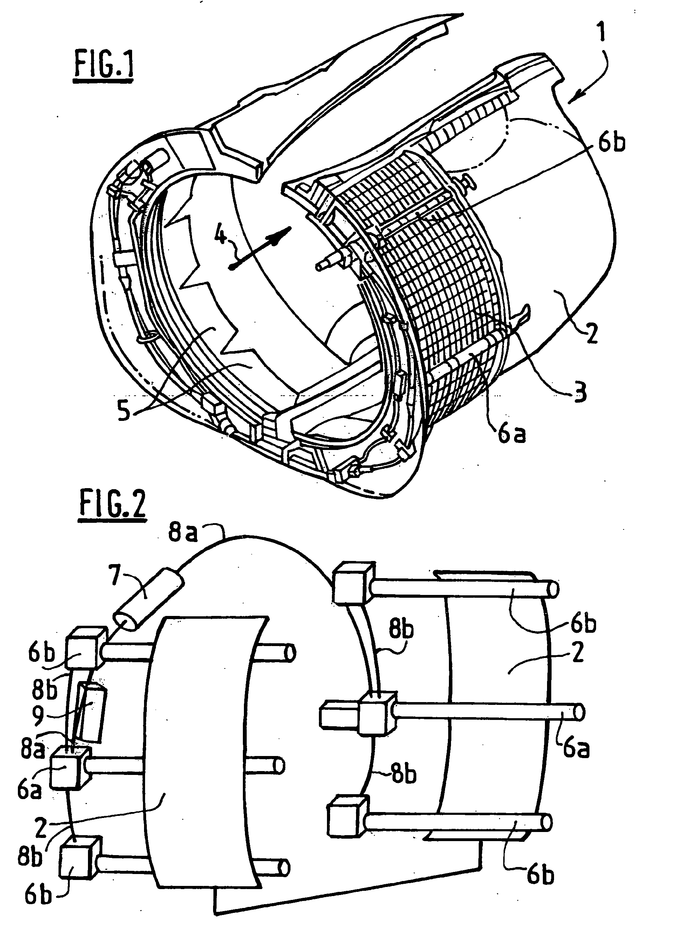

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à des moyens de commande 9, comprenant un microcontrôleur. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Selon une variante non représentée, seuls deux vérins haut et bas sont utilisés pour chaque capot, actionnés par un moteur électrique unique relié à une interface de commande. La puissance délivrée par le moteur électrique est distribuée aux deux vérins haut et bas par l'intermédiaire de deux arbres de transmission flexibles 8a.

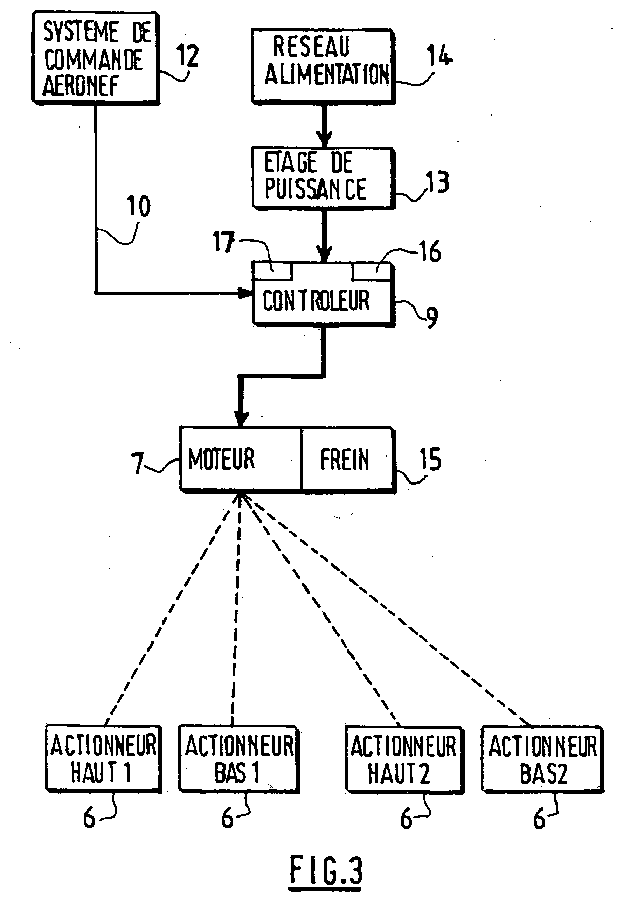

La figure 3 montre schématiquement un système de commande de l'actionnement de deux capots avec pour chaque capot deux actionneurs haut et bas.

Ainsi que représenté sur la figure 3 un système de commande des actionneurs d'un inverseur de poussée selon l'invention comprend des moyens de commande du moteur électrique 7 constitués par un microcontrôleur 9.

Ce microcontrôleur 9 est relié par des moyens de communication 10 au système de commande 12 de l'aéronef.

Le système de commande comprend également un étage de puissance 13 relié au réseau d'alimentation 14 de l'aéronef.

Le microcontrôleur 9 permet la commande d'un moteur électrique 7 et des vérins ou actionneurs 6 comme décrit précédemment. Le moteur comporte également un frein 15 commandé également par le microcontrôleur 9.

Le microcontrôleur 9 comprend des moyens d'estimation de la température extérieure au turboréacteur. Les moyens d'estimation comportent un capteur de mesure de température 16 agencé pour mesurer la température au niveau du-microcontrôleur 9.

Les moyens d'estimation comportent également des moyens de calcul 17 de la température extérieure au turboréacteur en fonction de la température mesurée au niveau du microcontrôleur 9.

La température extérieure au turboréacteur est estimée par l'intermédiaire d'abaques de calcul préalablement mémorisés dans les moyens de calcul 17.

Ainsi, les moyens d'estimation sont agencés pour estimer la température extérieure au turboréacteur en fonction de la température mesurée au niveau du microcontrôleur 9.

Le microcontrôleur 9 est agencé pour ajuster le couple moteur délivré par le moteur électrique 7 en fonction de cette température extérieure estimée.

La caractéristique de l'ajustement par le microcontrôleur 9 du couple moteur délivré par le moteur électrique 7 en fonction de la température extérieure estimée comprend un ensemble de paliers correspondant à des gammes de températures distinctes.

Il doit être noté que la valeur de l'ajustement du couple moteur est déterminée au départ d'une phase d'actionnement pour la durée de la phase d'actionnement.

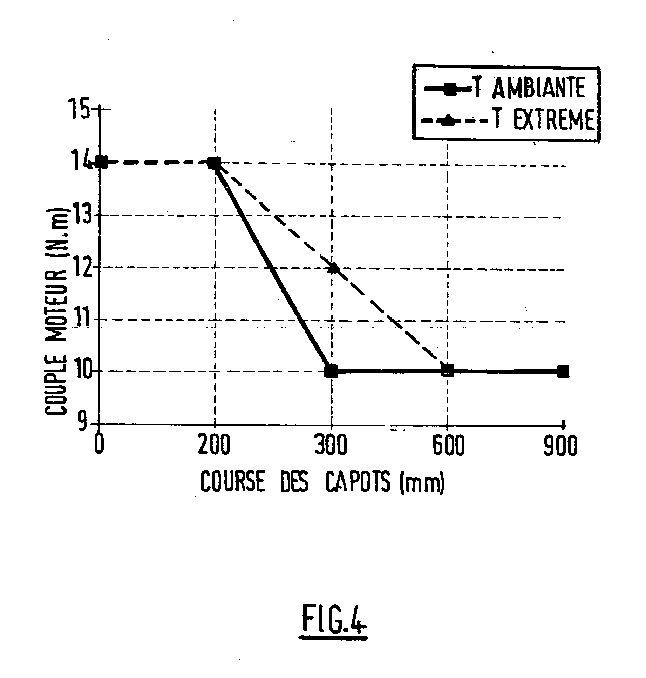

La figure 4 montre deux courbes représentant l'évolution du couple moteur en fonction de la course des capots pour deux valeurs de température distinctes, l'une correspondant à une température extrême et l'autre correspondant à la température ambiante, et pour un régime moteur donné. On constate que l'adaptation du couple moteur est effectuée pour la portion des courbes entre 200 et 600 mm de course des capots.

Comme il va de soi, l'invention ne se limite pas à la seule forme d'exécution de ce système de commande, décrite ci-dessus à titre d'exemple, elle en embrasse au contraire toutes les variantes de réalisation.

## Revendications

1. Système de commande d'au moins un actionneur (6) de capots (2) d'un inverseur de poussée pour turboréacteur comprenant :
- au moins un actionneur (6) de capot (2) entraîné par au moins un moteur électrique (7),
- des moyens de commande (9) du moteur électrique (7),
**caractérisé en ce que**
les moyens de commande (9) du moteur électrique comprennent des moyens de détermination et/ou d'estimation de la température extérieure au turboréacteur, les moyens de commande du moteur électrique étant agencés pour ajuster le couple moteur délivré par le moteur électrique en fonction de cette température extérieure,
**et en ce que**
les moyens de détermination et/ou d'estimation comportent des moyens de mesure de température (16) agencés pour mesurer la température au niveau des moyens de commande, les moyens de détermination et/ou d'estimation étant agencés pour déterminer la température extérieure au turboréacteur en fonction de la température mesurée.

2. Système selon la revendication 1, dans lequel la caractéristique de l'ajustement par les moyens de commande du couple moteur délivré par le moteur électrique (7) en fonction de la température extérieure comprend un ensemble de paliers correspondant à des gammes de températures distinctes.

3. Système selon l'une des revendications 1 et 2, dans lequel la valeur de l'ajustement du couple moteur est déterminée au départ d'une phase d'actionnement pour la durée de la phase d'actionnement.

## Claims

1. A system for controlling at least one actuator (6) for cowls (2) of a thrust reverser for a turbojet engine, comprising:
- at least one cowl (2) actuator (6) driven by at least one electric motor (7),
- means (9) for controlling the electric motor (7),
**characterized in that**
the means for controlling (9) the electric motor comprise means for determining and/or estimating the temperature outside of the turbojet engine, the means for controlling the electric motor being arranged for adjusting the motor torque output by the electric motor depending on this outside temperature,
and **in that**
the determining and/or estimating means comprise temperature measuring means (16) arranged for measuring the temperature at the control means, the determining and/or estimating means being arranged for determining the temperature outside of the turbojet engine depending on the measured temperature.

2. The system according to claim 1, wherein the characteristic of the adjustment by the means for controlling the motor torque output by the electric motor (7) depending on the outside temperature comprise a set of levels corresponding to distinct temperature ranges.

3. The system according to any of claims 1 and 2, wherein the value of the adjustment of the motor torque is determined at the beginning of an actuating phase for the duration of the actuating phase.

## Patentansprüche

1. System zum Steuern mindestens eines Stellglieds (6) für Abdeckungen (2) eines Schubumkehrers für ein Turboluftstrahltriebwerk, umfassend:
- mindestens ein Stellglied (6) für Abdeckungen (2), das von mindestens einem Elektromotor (7) angetrieben wird,
- Mittel (9) zum Steuern des Elektromotors (7),
**dadurch gekennzeichnet, dass**
die Mittel zum Steuern (9) des Elektromotors Mittel zum Bestimmen und/oder Schätzen der Temperatur außerhalb des Turboluftstrahltriebwerks umfassen, wobei die Mittel zum Steuern des Elektromotors angeordnet sind, um das Motordrehmoment, das von dem Elektromotor ausgegeben wird, in Abhängigkeit von dieser Außentemperatur einzustellen,
und dass
die Bestimmungs- und/oder Schätzungsmittel Temperaturmessmittel (16) umfassen, die angeordnet sind, um die Temperatur an den Steuermitteln zu messen, wobei die Bestimmungs- und/oder Schätzungsmittel angeordnet sind, um die Temperatur außerhalb des Turboluftstrahltriebwerks in Abhängigkeit von der gemessenen Temperatur einzustellen.

2. System nach Anspruch 1, wobei die Kennlinie der Einstellung durch die Mittel zum Steuern des Motordrehmoments, das von dem Elektromotor (7) abgegeben wird, in Abhängigkeit von der Außentemperatur eine Reihe von Stufen umfasst, die unterschiedlichen Temperaturbereichen entsprechen.

3. System nach einem der Ansprüche 1 und 2, wobei der Wert der Einstellung des Motordrehmoments am Anfang einer Betätigungsphase für die Dauer der Betätigungsphase bestimmt wird.
